## Europäisches Patentamt
## European Patent Office
## Office européen des brevets

(11) Veröffentlichungsnummer: **0 001 239**
**B1**

(12) **EUROPÄISCHE PATENTSCHRIFT**

(21) Anmeldenummer: **78100825.5**

(22) Anmeldetag: **06.09.78**

(51) Int. Cl.³: **C 08 G 8/18, C 08 G 8/24, C 09 D 11/10**

(54) **Kondensationsprodukte, Verfahren zu deren Herstellung und deren Verwendung als Fixiermittel für basische Farbstoffe.**

(30) Priorität: **15.09.77 DE 2741484**

(43) Veröffentlichungstag der Anmeldung:
**04.04.79 Patentblatt 79/7**

(45) Bekanntmachung des Hinweises auf die Patenterteilung:
**25.02.81 Patentblatt 81/8**

(84) Benannte Vertragsstaaten:
**CH DE FR GB**

(56) Entgegenhaltungen:
**DE - B - 1 217 409**
**DE - C - 372 933**
**GB - A - 1 447 805**
**US - A - 2 411 557**
**US - A - 3 410 818**

(73) Patentinhaber: **BAYER AG**
**Zentralbereich Patente, Marken und Lizenzen**
**D-5090 Leverkusen 1, Bayerwerk (DE)**

(72) Erfinder: **Reitz, Gunther, Dr.**
**Andreas-Gryphius-Strasse 20**
**D-5000 Köln 80 (DE)**
(72) Erfinder: **Boehmke, Günther, Dr.**
**Kurt-Schuhmacher-Ring 152**
**D-5090 Leverkusen (DE)**
(72) Erfinder: **Haus, Artur, Dr.**
**Zum Eschental 8**
**D-5063 Overath (DE)**
(72) Erfinder: **Meister, Martin, Dr.**
**Kaiserstrasse 24**
**D-5090 Leverkusen (DE)**

Courier Press, Leamington Spa, England.

# Kondensationsprodukte, Verfahren zu deren Herstellung und deren Verwendung als Fixiermittel für basische Farbstoffe

Die Erfindung betrifft Kondensationsprodukte aus Salicylsäure, Formaldehyd und Phenol und/oder Kresol und/oder Bisphenol A, die durch sauer katalysierte Reaktion von Salicylsäure und Formaldehyd in einer ersten Stufe und anschließende Reaktion mit dem Phenol oder den Phenolen erhalten werden, ihre Herstellung und ihre Verwendung als Fixiermittel für basische Farbstoffe in Papierdruck.

Die Kondensationsprodukte sind dadurch gekennzeichnet, daß zu ihrer Herstellung ein Molverhältnis von Salicylsäure zu Formaldehyd zu Phenol(en) wie 1:(1,0—9,0): (0,6—8) verwendet wird, wobei das Molverhältnis der Summe aus Salicylsäure und Phenol(en) zu Formaldehyd 1:(0,6—1,0) beträgt.

Besonders geeignete Fixiermittel werden erhalten, wenn das Molverhältnis von Salicylsäure zu Formaldehyd zu Phenol 1:(1,4—4,5):(1—4,5) beträgt. In diesem Fall beträgt das molare Verhältnis der Summe von Salicylsäure und Phenol zu Formaldehyd 1:(0,7—0,9).

Die erste Reaktionsstufe erfolgt so, daß man die Salicylsäure mit der anspruchsgemässen Menge 20- bis 40%iger Formaldehydlösung zusammengibt und erhitzt.

Dabei kann unter saurer Katalyse auf Rückflußtemperatur erhitzt werden, oder es kann ohne oder mit sehr wenig Katalysator unter Eigenkatalyse der Hydroxycarbonsäure oberhalb der Siedetemperatur, z.B. bei 103—160°C, unter Überdruck gearbeitet werden.

Als Säurekatalysator können anorganische und organische Säuren, insbesondere Mineralsäuren, z.B. Salzsäure, Phosphorsäure und Schwefelsäure, oder Ameisensäure verwendet werden.

Die als Katalysatoren dienenden Säuren werden im Molverhältnis 0,0001—0,5, bevorzugt 0,001—0,1, bezogen auf Hydroxycarbonsäure zugesetzt.

Es hat sich herausgestellt, daß eine Reaktionszeit von 30—180 Minuten die besten Ergebnisse liefert. Bei der Reaktion bei Rückflußtemperatur beobachtet man bald nach Erreichen der Rückflußtemperatur, daß die Lösung klar wird, nach ca. einer Stunde wird sie opal und mit wachsender Kondensationzeit immer trüber.

In dieser Vorstufe werden wasserlösliche Produkte erhalten. Es handelt sich dabei vermutlich um durch maximal zwei Hydroxymethylgruppen substituierte Salicylsäure-Derivate.

Zu dem so hergestellten Vorkondensat läßt man daraufhin das Phenol oder die Phenole tropfen, wobei eine deutliche Wärmetönung zu heftigem Rückfluß führen kann, die auf die im Vergleich zu Hydroxycarbonsäure viel höhere Reaktivität hinweist. Es wird bevorzugt reines Phenol oder eine Mischung aus Phenol und Kresol in Verhältnis 1:(1 bis 0) zugegeben. Die Nachkondensation erfolgt bei Temperaturen von 80—140°C, bevorzugt bei 90°C bis 130°C, über eine Zeitdauer von 30 Minuten bis 15 Stunden, bevorzugt von 1 bis 4 Stunden.

Das entstandene Kondensat ist eine in Wasser unlösliche, in Alkoholen wie Äthanol gut lösliche, zähviskose bis plastische Substanz, die in der Wärme Fäden zieht und in der Kälte erstarrt.

Die Löslichkeit in Äthanol beträgt bis zu 70%.

Zur Herstellung des Fixiermittels wird getrocknet. Dazu kann vorher überschüssige Säure, z.B. Schwefelsäure, ausgewaschen werden. Verbliebene Spuren von phenolischen Verbindungen können durch Wasserdampfdestillation entfernt werden. Das Trocknen erfolgt auf Trockenblechen oder einfacher noch durch Abdestillieren des überschüssigen Wassers aus dem Reaktionsgefäß, wobei eine in der Hitze rührbare bis feste Masse zurückbleibt. Sollte die Masse nicht mehr rührbar sein, gibt man einige Teile Äthylglykol zu und destilliert das restliche Wasser ab.

Das Produkt kann nach dem Mahlen als Pulver eingesetzt werden, oder es wird direkt in Äthylalkohol zu einer 40- bis 70%igen Lösung gelöst.

Die Herstellung von Kondensationsprodukten aus aromatischen Hydroxycarbonsäuren, Formaldehyd und bestimmten Phenolen ist aus der DE—PS 693 770 und der DE—PS 714 819 bekannt.

In diesen Fällen handelt es sich um eine gleichzeitige Kondensation von zwei aromatischen Hydroxyverbindungen mit vergleichbarer, gegenüber dem unsubstituierten Phenol stark verminderter Reaktivität. Die Reaktivitätsminderung ist ein Folge der Substitution dieser aromatischen Hydroxyverbindungen durch elektronenziehende Substituenten, z.B. durch die COOH-Gruppe bei den aromatischen Oxycarbonsäuren oder durch die $SO_2$-Gruppe (DE—PS 693 770) oder aber durch das Cl-Atom (DE—PS 714 819). Da bei allen diesen Verbindungen die Reaktionsgeschwindigkeit von vergleichbarer Größenordnung ist, bilden sie bei gleichzeitiger Kondensation mit Formaldehyd Mischkondensate mit einer angenäherten, den Molmengenverhältnissen entsprechenden Gleichverteilung der Einzelkomponenten.

Dies ist aber nicht der Fall, wenn man eine vergleichsweise wenig reaktive aromatische Hydroxyverbindung, z.B. Salicylsäure oder ein mit einer langkettigen Alkylgruppe substituiertes Phenol, mit einer höher reaktiven Verbindung, z.B. Phenol oder Kresol, gleichzeitig umsetzen möchte.

In diesem Fall bilden sich bevorzugt Phenol-Formaldehyd-Kondensate, die bald zu unlöslichen Produkten führen, während z.B. die Salicylsäure zu einem beträchtlichen Teil nicht mit dem Formaldehyd und dem Phenol kondensiert und ausgewaschen werden kann.

Mit dem neuen Verfahren ist es nun gelungen, die gewünschten Kondensationsprodukte aus Komponenten mit unterschiedlicher Reaktivität gegenüber Formaldehyd herzustellen.

Kondensationsprodukte aus Salicylsäure oder ihren Derivaten, Formaldehyd und Resorcin, die u.a. durch stufenweise Reaktion von Salicylsäure oder ihren Derivaten mit Formaldehyd und anschließend mit Resorcin hergestellt werden, sind aus der US—PS 3 410 818 bekannt. Sie stellen Haftmittel für synthetische Fasern dar. Laut Beschreibung kann die Kondensation in alkalischem oder saurem Medium durchgeführt werden. Im Beispiel 2 wird die dem anspruchsgemäßen Verfahren nächstliegende Kondensation beschrieben, und zwar eine stufenweise Reaktion, bei der die Vorkondensation von Salicylsäure mit Formaldehyd in Gegenwart von Natronlauge durchgeführt wird. Eine entsprechende Umsetzung in Gegenwart von Säuren wird in keinem Beispiel beschrieben. Aus der Lehre der US-Patentschrift konnte darum nicht geschlossen werden, daß bei einer sauren Vorkondensation und durch Ersatz von Resorcin durch die anspruchsgemäßen Phenole ausgezeichnete Fixiermittel für basische Farbstoffe erhalten werden. In ihrer Wirkung sind sie den aus der US—PS 3 410 818 bekannten Kondensationsprodukten überlegen.

Die neuen Kondensationsprodukte finden Verwendung als Fixiermittel für kationische Farbstoffe in Druckfarben, insbesondere in Flexodruckfarben für Papier, Metall- oder Kunststoff-Folien.

Als kationische Farbstoffe kommen Farbstoffe der verschiedensten Verbindungsklassen in Betracht, beispielsweise Diphenylmethan-, Triphenylmethan- und Rhodaminfarbstoffe, Oniumgruppen enthaltende Azo- oder Anthrachinonfarbstoffe, ferner Thiazin-, Oxazin-, Methin- und Azomethinfarbstoffe, wie sie beispielsweise in Ullmanns Encyclopädie der technischen Chemie, 3. Auflage, 1970, Ergänzungsband, S. 225, beschrieben sind.

Mit Hilfe der neuen Kondensationsprodukte wird eine ausgezeichnete Naßechtheit der Drucke erzielt. Sie sind praktisch geruchlos, gut verträglich mit anderen üblichen Bestandteilen von Druckfarben, z.B. Bindemittel und sauren Fixierharzen, wie sie in den Lackrohstofftabellen von Dr. E. Karsten (Curt R. Vincentz-Verlag, Hannover) beschrieben sind, und infolge ihrer guten Alkohollöslichkeit zur Herstellung von konzentrierten, handelsfähigen Lösungen geeignet.

Sie können den hierzu geeigneten bekannten Druckfarben in fester Form oder in Form ihrer alkoholischen Lösungen zugefügt werden. Ihr Gehalt in der Druckfarbe richtet sich dabei nach der Fixierbarkeit des verwendeten Farbstoffs. Im allgemeinen wird ein Farbstoff-Fixiermittel-Verhältnis von 1:0,5—3, vorzugsweise von 1:1—1,5 angewandt.

Fixiermittel aus aromatischen Hydroxycarbonsäuren, Formaldehyd und mehreren Phenolen, von denen eines ein Phenol mit einer Alkylgruppe von mindestens 5 C-Atomen darstellt, sind aus der DE—AS 1 217 409 bekannt. Zu ihrer Herstellung werden entweder alle Komponenten in saurem Medium gleichzeitig zur Reaktion gebracht, oder ein Teil der Phenole wird mit Formaldehyd vorkondensiert, und das Kondensat wird dann mit der Hydroxycarbonsäure und dem Phenol mit der Alkylkette von mindestens 5 C-Atomen umgesetzt. Diese Kondensate sind den erfindungsgemäßen Kondensaten in der Verbesserung der Naßechtheiten der Farbstoffe unterlegen.

Die in den Beispielen angegebenen Colour-Index-Nummern beziehen sich auf die 3. Auflage (1971).

### Beispiel 1

69 g Salicylsäure, 120 g 30%ige wäßrige Formaldehydlösung und 8 g 50%ige Schwefelsäure werden in einen Kolben gegeben, zum Sieden erhitzt und 2 Stunden bei 95°C gerührt. Es ist eine klare bis opale Lösung entstanden. Nach leichtem Abkühlen wird eine Mischung von 47 g Phenol und 54 g Kresol zugetropft, wobei die Temperatur bis zum Sieden ansteigt. Es wird zwei Stunden bei Siedetemperatur nachkondensiert, mit Wasser gewaschen und das restliche Wasser abdestilliert. Die Rückstand wird in Äthylalkohol 60%ig gelöst.

### Beispiel 2

69 g Salicylsäure, 120 g 30%ige wäßrige Formaldehydlösung und 8 g 50%ige Schwefelsäure werden zum Sieden erhitzt und eine Stunde bei Rückfluß weitergerührt. Dann werden 94 g Phenol zugetropft. Es wird zwei Stunden bei Siedetemperatur nachkondensiert, mit Wasser gewaschen und getrocknet. Das Produkt wird zu einem Pulver vermahlen. Es ist bis zu 70%ig in Alkohol löslich.

### Beispiel 3

69 g Salicylsäure, 55 g 30%ige wäßrige Formaldehydlösung und 2 g 50%ige Schwefelsäure werden zusammengegeben und 1 bis 2 Stunden auf Rückflußtemperatur erhitzt, nach leichtem Abkühlen werden 60 g Bis-2,2-(4-hydroxyphenyl)-propan zugesetzt, und es wird zwei Stunden bei 80—90°C weiterkondensiert. Nach dem Waschen und Trocknen wird pulverisiert. Das Produkt ist zu 60% in Äthylalkohol löslich.

### Beispiel 4

34,5 g Salicylsäure, 96,3 g 37%ige wäßrige Formaldehydlösung und 8 g 50%ige Schwefelsäure werden 2 Stunden auf 100°C erhitzt, dann wird eine Mischung von 47 g Phenol und 54 g Kresol zugetropft und weitere 1,5 Stunden auf 100°C erhitzt. Nach dem Waschen und Trocknen wird pulverisiert. Die Substanz ist zu 60% in Äthylalkohol löslich.

### Beispiel 5

18 g Salicylsäure und 90 g 37%ige Formaldehydlösung und 8 g 50%ige Schwefelsäure werden 2 Stunden bei 100°C gerührt, dann wird eine Mischung von 54 g Kresol und 47 g Phenol zulaufen lassen. Nach einer weiteren Stunde bei 100°C wird gewaschen, dann getrocknet und pulverisiert. Das Produkt ist zu 60% in Alkohol löslich.

### Beispiel 6

113 g HCHO, 30%ig, 4 g 50%ige Schwefelsäure und 69 g Salicylsäure werden eine Stunde bei 100°C gerührt, dann werden 94 g Phenol langsam zugegeben. Es wird weitere 3 Stunden bei 100°C gerührt, gewaschen, getrocknet und zu 60% in Alkohol gelöst.

### Beispiel 7

103 g Salicylsäure und 168 g 30%ige wäßrige Formaldehydlösung sowie 200 mg konz. $H_2SO_4$ werden 1,5 Stunden bei 110—120°C vorkondensiert, dann werden bei 100°C 70,5 g Phenol und 81 g o-Kresol im Gemisch zugetropft, und es wird weitere 2 Stunden bei 110—120°C nachkondensiert. Anschließend werden 1,5 kg Wasserdampf durchgeblasen, das restliche Wasser wird abdestilliert und das Produkt getrocknet. Dann wird zu 60% Feststoffgehalt in Äthanol gelöst.

### Beispiel 8

25 g der 60%igen Lösung von einem der Beispiele 1 bis 7 werden mit 6 g Äthylglykol und 10 g des gelben Farbstoffs C.I. Nr. 41000 versetzt. Dann wird mit einigen Millilitern dieser Lösung auf einem Wachsrohpapier mit einer Rakel eine dünne Farbstoffschicht ausgezogen. Nach dem Trocknen wird auf diese Farbstoffschicht ein feuchtes Filterpapier und darauf eine mit einem 1 kg-Gewicht beschwerte Glasplatte gelegt. Nach 4 Stunden wird das Filterpapier abgezogen und die Menge des auf das Filterpapier übergegangenen Farbstoffes optisch begutachtet. In allen Fällen zeigt sich eine ausgezeichnete Naßechtheit.

### Beispiel 9

Auf Flexodruckmaschinen, die mit Infrarot- oder Heißluft-Trockenaggregaten ausgerüstet sind, können auf Papier bei einer Druckgeschwindigkeit bis zu 400 m/Min. mit den Einstellungen a-c Drucke mit ausgezeichneter Wasserfestigkeit nach DIN 16524, Blatt 1, erhalten werden.

a. 8 g des gelben Farbstoffs C.I. 41000, 8 g eines Bindemittels auf Ketonarzbasis und 12 g des nach Beispiel 1 erhaltenen Pulvers werden in 5 g Äthylglykol und 67 g Äthylalkohol gelöst.

b. 60 g des nach Beispiel 1 erhaltenen Pulvers werden bei Zimmertemperatur unter Rühren in 10 g Äthylglykol und 30 g Äthylalkohol gelöst. 34 g dieser Lösung werden unter Rühren zu 66 g einer Lösung aus 10 g des roten Farbstoffs C.I.Nr. 42520, 14 g eines Maleinatharzes und 42 g Äthylalkohol gegeben.

c. 60 g des nach Beispiel 1 erhaltenen Pulvers werden bei 60°C in 40 g Äthylalkohol gelöst. 17 g dieser Lösung werden unter Rühren zu 83 g einer Lösung aus 10 g des grünen Farbstoffs C.I. Nr. 42040, 15 g eines Kolophonium-modifizierten Phenolharzes mit einer Säurezahl bon 80—90 und 58 g Äthylalkohol gegeben.

## Patentansprüche

1. Kondensationsprodukte aus Salicylsäure, Formaldehyd und Phenol und/oder Kresol und oder Bisphenol A, die durch sauer katalysierte Reaktion von Salicylsäure und Formaldehyd in einer ersten Stufe und anschließende Reaktion mit dem Phenol oder den Phenolen erhalten werden, dadurch gekennzeichnet, daß zu ihrer Herstellung ein Molverhältnis von Salicylsäure zu Formaldehyd zu Phenol(en) wie 1:(1,0—9,0):(0,6—8) verwendet wird, wobei das Molverhältnis der Summe aus Salicylsäure und Phenol(en) zu Formaldehyd 1:(0,6—1,0) beträgt.

2. Kondensationsprodukte gemäß Anspruch 1, dadurch gekennzeichnet, daß sie erhalten werden bei Rückflußtemperatur in der ersten Stufe und bei 80—140°C in der anschließenden Stufe.

3. Kondensationsprodukte gemäß Anspruch 2, dadurch gekennzeichnet, daß Schwefelsäure als Katalysator verwendet wird.

4. Verwendung Kondensationsprodukten gemäß Anspruch 1 als Fixiermittel für basische Farbstoffe in Druckverfahren.

## Revendications

1. Produits de condensation d'acide salicylique, de formaldéhyde et de phénol et/ou de crésol et/ou de bisphénol A, sont obtenus par réaction, catalysée par un acide, de l'acide salicylique et du formaldéhyde dans une première étape et réaction subséquente avec le phénol ou les phénols, caractérisés en ce qu'on utilise pour leur préparation une proportion molaire de l'acide salicylique au formaldéhyde au(x) phénol(s) de 1:(1,0—9,0):(0,6—8), le rapport molaire de la somme de l'acide salicylique et du ou des phénols au formaldéhyde s'élevant à 1:(0,6—1,0).

2. Produits de condensation suivant la

7     **0 001 239**     8

revendication 1, caractérisés en ce qu'ils sont obtenus à la température de reflux dans la première étape et à 80—140°C dans l'étape suivante.

3. Produits de condensation suivant la revendication 2, caractérisés en ce que l'acide sulfurique est utilisé comme catalyseur.

4. Utilisation de produits de condensation suivant la revendication 1 comme fixateurs pour colorants basiques dans des procédés d'impression.

## Claims

1. Condensation products of salicylic acid, formaldehyde and phenol and/or cresol and/or bisphenol A, which are obtained by the acid-catalyzed reaction of salicylic acid and formaldehyde in a first stage and by subsequent reaction of the products with the phenol or phenols, characterised in that to prepare those condensation products a molar ratio of salicylic acid to formaldehyde to phenol(s) such as 1:(1.0—9.0):(0.6—8) is used, the molar ratio of the sum of salicylic acid and phenol(s) to formaldehyde being 1:(0.6—1.0).

2. Condensation products according to Claim 1, characterized in that they are obtained at the reflux temperature in the first stage and at 80—140°C in the subsequent stage.

3. Condensation products according to Claim 2, characterised in that sulphuric acid is used as the catalyst.

4. Use of condensation products according to Claim 1 as fixing agents for basic dyestuffs in printing processes.